(19) Europäisches Patentamt
European Patent Office
Office européen des brevets

(11) **EP 2 570 971 A2**

(12) **EUROPEAN PATENT APPLICATION**

(43) Date of publication:
**20.03.2013 Bulletin 2013/12**

(51) Int Cl.:
*G06K 9/46* *(2006.01)*

(21) Application number: **12184251.2**

(22) Date of filing: **13.09.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **14.09.2011 JP 2011200745**<br>**28.08.2012 JP 2012187961** | (71) Applicant: **Ricoh Company, Ltd.**<br>**Tokyo 143-8555 (JP)**<br><br>(72) Inventor: **Hikida, Satoshi**<br>**Tokyo, 143-8555 (JP)**<br><br>(74) Representative: **Schwabe - Sandmair - Marx**<br>**Patentanwälte**<br>**Stuntzstraße 16**<br>**81677 München (DE)** |

(54) **Image processing apparatus, image processing method, and program**

(57)     An image processing apparatus includes a receiving unit (104) that receives a target area to which a special effect is to be applied, which is the target area specified by a user in image data displayed on a display unit; a similar area searching unit (105) that searches the image data for similar areas on the basis of a feature value indicating an image characteristic of the specified target area; a display processor (103) that displays, on the display unit, a predetermined number of similar areas from among the similar areas; a receiving unit (104) that receives selected similar areas; and a special effect processor (111) that performs a special effect process for applying the special effect to the selected similar areas and the specified target area.

FIG.1

**Description**

CROSS-REFERENCE TO RELATED APPLICATIONS

The present application claims priority to and incorporates by reference the entire contents of Japanese Patent Application No. 2011-200745 filed in Japan on September 14, 2011 and Japanese Patent Application No. 2012-187961 filed in Japan on August 28, 2012.

BACKGROUND OF THE INVENTION

1. Field of the Invention

The present invention relates to an image processing apparatus, an image processing method, and a program.

2. Description of the Related Art

Conventional production printing technology (printing with high-speed copiers for the commercial printing market or the office printing market) is known in which a special effect is applied to a printed image by changing its luster by using a clear toner (transparent toner) or by using a special color, such as a metal or fluorescent color. Furthermore, Adobe Photoshop (trademark) is known as software for creating imaged image data (image data for printing) for applying such a special effect. Regarding such software, using an area selecting function of the software, a user can specify an area in image data to which a special effect is applied.

Regarding a technology for searching for a similar image, for example, Japanese Patent Publication No. 4148642 discloses a similar image searching device that searches for a similar image that is similar to a requested image from among registered images that were previously registered and outputs the search result. The similar image searching device searches for an image similar to the requested image on the basis of the similarity between different images. Specifically, the similar image searching device extracts a searched image from registered images, generates a tree structure having multiple hierarchies from the searched image, and outputs the search result on the basis of the feature values of the image that was searched in each hierarchy and the feature values of the requested image.

However, the creation of the above-described imaged image data for applying such a special effect has a problem in that, when there are many areas to which a user wants to apply a special effect in image data, the user has to specify all of the areas, which is time-consuming.

It is reasonable to assume that an area similar to an area selected by the user can be automatically extracted as an area to which the special effect is to be applied. However, because a user does not necessarily want to apply a special effect to all the areas similar to a target area, it is not preferable that the special effect be automatically applied to all the areas similar to the area selected by the user.

The present invention was made in view of the above-described problem. There is needed to provide an image processing apparatus that can extract an area to which the user wants to apply a special effect by following a simple operation according to a method for selecting an object area to create imaged image data for applying the special effect to a printed matter, which is a method in which the user specifies the number of areas, candidates for object areas are extracted based on the specified number, and feedback is given on the order of the candidates for the object areas after a selection is received from the user. There is also needed to provide an image processing method and a program.

SUMMARY OF THE INVENTION

It is an object of the present invention to at least partially solve the problems in the conventional technology.

An image processing apparatus comprising: a target area receiving unit that receives at least one target area to which a special effect is to be applied, the target area being specified by a user in image data displayed on a display unit; a similar area searching unit that searches for similar areas that are image areas similar to the specified target area from among the image data on the basis of a feature value indicating an image characteristic of the specified target area that is received by the target area receiving unit; a display processor that displays, on the display unit, a predetermined number of similar areas from among the similar areas that are detected by the similar area searching unit; a similar area receiving unit that receives desired similar areas that are selected by the user from among the predetermined number of similar areas displayed on the display unit; and a special effect processor that performs a special effect process for applying the special effect to the selected similar areas that are received by the similar area receiving unit and the specified target area.

An image processing method performed by an image processing apparatus, the image processing method comprising: by a target area receiving unit, receiving at least one target area to which a special effect is to be applied, the target area being specified by a user in image data displayed on a display unit; by a similar area searching unit, searching for similar areas that are image areas similar to the specified target area from among the image data on the basis of a feature value indicating an image characteristic of the specified target area that is received at the receiving step; by a display processor, displaying, on the display unit, a predetermined number of similar areas from among the similar areas that are detected at the searching step; by a similar area receiving unit, receiving desired similar areas that are selected by the user from among the predetermined number of similar areas displayed on the display unit; and by a special effect processor, performing a special effect process for applying the special effect to the selected similar areas that are received at the receiving step and the specified target area.

A computer program product comprising a non-transitory computer-usable medium for causing a computer to function as: a target area receiving unit that receives at least one target area to which a special effect is to be applied, the target area being specified by a user in image data displayed on a display unit; a similar area searching unit that searches for similar areas that are image areas similar to the specified target area from among the image data on the basis of a feature value indicating an image characteristic of the specified target area that is received by the target area receiving unit; a display processor that displays, on the display unit, a predetermined number of similar areas from among the similar areas that are detected by the similar area searching unit; a similar area receiving unit that receives desired similar areas that are selected by the user from among the predetermined number of similar areas displayed on the display unit; and a special effect processor that performs a special effect process for applying the special effect to the selected similar areas that are received by the similar area receiving unit and the specified target area.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a block diagram of a configuration of an image processing apparatus;
FIG. 2 is a flowchart of the flow of a graph cut algorithm;
FIG. 3 is a diagram for explaining the graph cut algorithm;
FIGS. 4A to 4C are diagrams for explaining the graph cut algorithm;
FIG. 5 is a flowchart of the flow of a SIFT process;
FIG. 6 is a diagram for explaining scale detection;
FIG. 7 is a diagram for explaining keypoint detection;
FIGS. 8A to 8C are diagrams for explaining keypoint localization;
FIG. 9 is a diagram for explaining removal of low-contrast keypoints;
FIGS. 10A to 10C are diagrams for explaining calculation of an orientation;
FIG. 11 is a diagram for explaining calculation of a feature vector;
FIG. 12 is a diagram for explaining an example of calculation of a similarity;
FIG. 13 is a diagram for explaining an example of a change in a weight;
FIG. 14 is a flowchart of image processing performed by the image processing apparatus 100;
FIG. 15 is a diagram of image data 200;
FIG. 16 is a diagram of an image that is displayed on a display unit during image processing;
FIG. 17 is a diagram of another image that is displayed on the display unit during image processing; and
FIG. 18 is a diagram of another image that is displayed on the display unit during image processing.

DETAILED DESCRIPTION OF THE PREFERRED EMBODIMENTS

Embodiments of an image processing apparatus, an image processing method, and a program will be described in detail below with reference to the accompanying drawings.

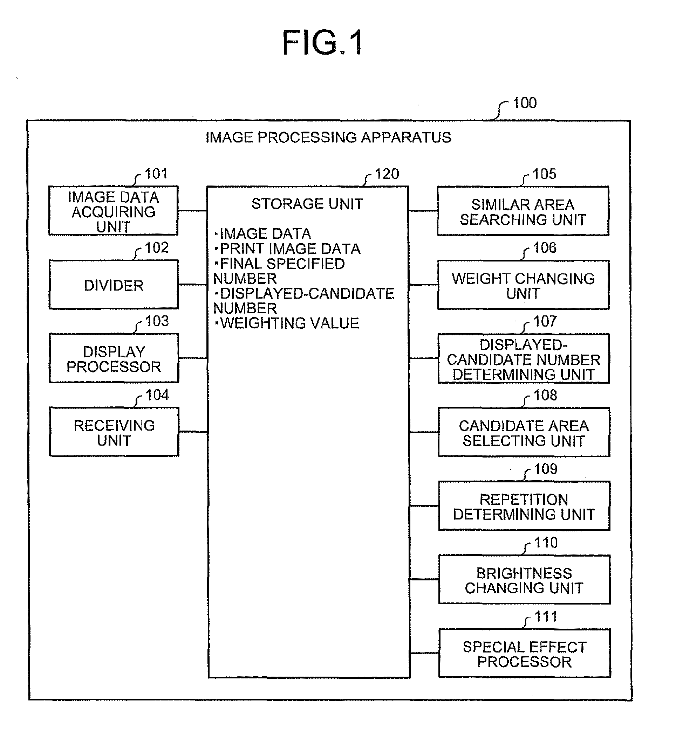

FIG. 1 is a block diagram of a configuration of an image processing apparatus 100 according to an embodiment. The image processing apparatus 100 performs image processing such that an image forming apparatus (not shown) can apply a special effect to a part of an image printed on a recording medium. The special effect includes changing the luster by applying a clear toner (transparent toner) to a part of the image printed on the recording medium and applying a special color, such as a metal or fluorescent color. In the embodiment, an exemplary special effect of increasing the luster by applying a clear toner to change the luster of the image is described. More specifically, the image processing apparatus 100 performs a process for specifying an area to which a clear toner is applied by the image forming apparatus, which is the process performed on image data to be printed by the image forming apparatus.

The image processing apparatus 100 includes an image data acquiring unit 101, a divider 102, a display processor 103, a receiving unit 104, a similar area searching unit 105, a weight changing unit 106, a displayed-candidate number determining unit 107, a candidate area selecting unit 108, a repetition determining unit 109, a brightness changing unit 110, a special effect processor 111, and a storage unit 120.

The image data acquiring unit 101 acquires print image data from, for example, a file and stores the print image data in the storage unit 120. The divider 102 divides the image data stored in the storage unit 120 into multiple part areas according to predetermined rules. Specifically, the divider 102 divides the image data into multiple part areas in accordance with a graph cut algorithm, a watershed algorithm, or the like.

The graph cut algorithm is a method in which image segmentation is defined as the energy minimization problem and in which an image is divided into areas by solving the maximum flow problem in a graph structure. For example, the divider 102 can automatically separate a foreground and a background according to the graph cut algorithm by using distribution models of the foreground and the background and by using an energy minimization algorithm in the graph structure.

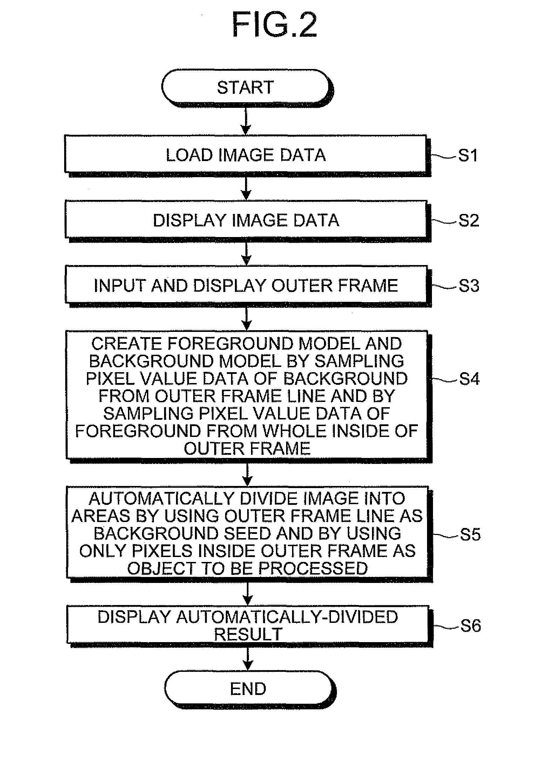

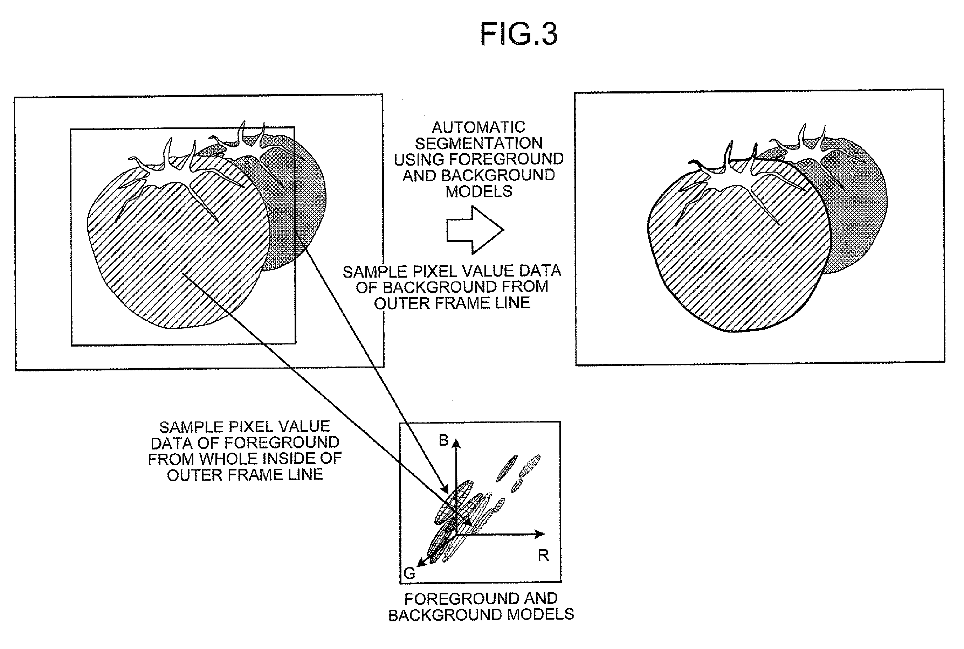

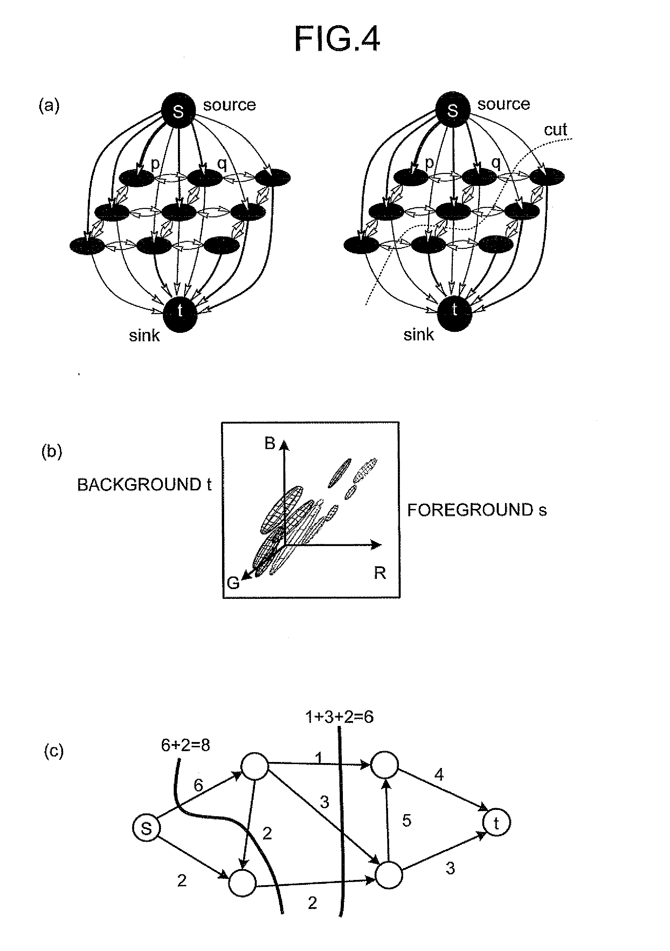

FIG. 2 is a flowchart of the flow of the graph cut algorithm. FIG. 3 and FIGS. 4A to 4C are diagrams for explaining the graph cut algorithm. The graph cut algorithm is a method in which nodes on a network are classified into a predetermined number of groups and in which both of an internode connection (t-link) and a connection to a supernode (n-link) are used to consider both of the adjacency effect and the similarity to a specific model, respectively. To apply the graph cut algorithm to the image segmentation in image processing, as illustrated in FIG. 4A, pixels in image data are assumed as nodes and the nodes are classified based on binary indicating a foreground and a background. The foreground and the background serve as super nodes. By providing a foreground model and a background model independently in addition to the adjacency effect, it becomes possible to divide an image into areas with high accuracy.

First, the divider 102 loads image data (Step S1), displays the loaded image data on the display unit (Step S2), and inputs and displays an outer frame (Step S3). As illustrated in FIG. 3, the divider 102 samples pixel value data of the background from the line of the outer frame and samples pixel value data of the foreground from the whole inside of the outer frame to thereby create the foreground model and the background model (Step S4).

As illustrated in FIG. 4B, the divider 102 approximates distributions of pixel values of the foreground and the background in an RGB three-dimensional space by Gaussian mixture model (GMM) for a predetermined number to thereby define the likelihood of the foreground and the likelihood of the background, and uses the defined likelihood as a weight to the super nodes. In the embodiment, the number of components in GMM is fixed to five. Therefore, it becomes possible to cope with a scattered background and a foreground with a complex color distribution.

As illustrated in FIG. 3, the divider 102 automatically divides the image into areas based on the energy minimization by using the line of the outer frame as a background seed and by using only pixels inside the outer frame line as an object to be processed (Step S5), and displays the divided areas on the display unit (Step S6).

Automatic image segmentation based on the energy minimization will be explained below. An energy function E used for the energy minimization is represented by Equation below.

$$\text{Energy function } E = E_{color} + E_{coherence}$$

The energy function E defines an energy argument ($E_{color}$) for evaluating whether each of pixels of image data input based on the foreground model and the background model is close to the foreground model or the background model, and calculates n-link. An argument ($E_{coherence}$) for evaluating the adjacency relationship based on t-link is incorporated in Equation of the energy function E.

As illustrated in FIG. 4C, the divider 102 divides a network so that the total cut energy is minimized and the energy in a class is maximized by using the above-described energy function E.

The divider 102 divides image data into multiple part areas by using the graph cut algorithm as described above. The method for dividing image data into areas by the divider 102 is not limited to the graph cut algorithm.

Other technical information can be understood with reference to C. Rother, V. Kolmogorv, A. Blake, GrabCut: Interactive Foreground Extraction Using Iterated Graph Cuts, ACM, Trans. Graphics (SIGGRAPH'04), vol. 23, no. 3, pp. 309-314, 2004.

The watershed algorithm is a method in which values of evaluation on an image are used as altitude and in which ridge points that are sequentially submerged if the landform were filled with water are regarded as an area boundary. The details of the watershed algorithm can be understood with reference to Vincent, Luc, and Pierre Soille, "Watersheds in Digital Spaces: An Efficient Algorithm Based on Immersion Simulations", IEEE Transactions on Pattern Analysis and Machine Intelligence, Vol 13, No. 6, June 1991, pp. 583-598). Specific processing using the watershed algorithm can be understood with reference to Japanese Patent Publication No. 4046920.

The display processor 103 refers to the storage unit 120 and performs a process for displaying information on a display unit, such as a display screen. The display processor 103 displays, for example, the image data that is stored in the storage unit 120 on the display unit.

The receiving unit 104 receives various types of information that are input by a user. The information that is input by the user includes a specified target area to which a special effect should be applied in image data and a final specified number that is the final number of target areas to which the special effect should be applied. The user may want to apply the special effect not to an area in the image data but to many areas. In such a case, the user inputs a final specified number.

The similar area searching unit 105 searches for, as target-area candidates, similar areas that are areas similar to the target area specified by the user. The similar area searching unit 105 searches for similar areas in the image data from among the areas other than the specified target area that is received by the receiving unit 104. Specifically, the similar area searching unit 105 calculates the similarity between the specified target area and the areas that are searched for similar areas on the basis of the feature values of the target area and the feature values of the searched areas. Predetermined multiple types of feature values are used by the similar area searching unit 105 to calculate similarity.

A feature value is, for example, a local feature value, such as a SIFT feature value or a SURF feature value, with regard to local gradient of contrast; the color histogram and the pixel value of each pixel contained in a target area with regard to color; a statistic based on the co-occurrence matrix with regard to texture; the central moment characteristic with regard to shape; and the curve characteristic of the outer shape with regard to curvature.

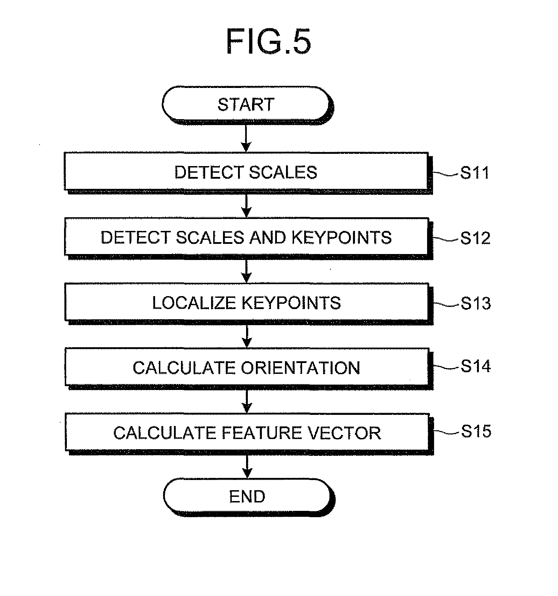

For example, the SIFT feature value as the local feature value can be obtained by a SIFT process performed by the similar area searching unit 105 as described below. FIG. 5 is a flowchart of the flow of the SIFT process. As illustrated in FIG. 5, the similar area searching unit 105 detects scales by a band-pass filter (Step S11), and detects, as keypoints, pixels whose values detected with the filter are extrema (minima or maxima) in the neighborhood (adjacent pixels or adjacent scales) (Step S12). The similar area searching unit 105 localizes the keypoints by removing excessively-detected portions from among the keypoints (Step S13), and calculates an orientation to ensure the robustness to rotation of image data (Step S14). The similar area searching unit 105 rotates the image data along the orientation and thereafter calculates a vector (Step S15). Accordingly, the SIFT feature value can be obtained.

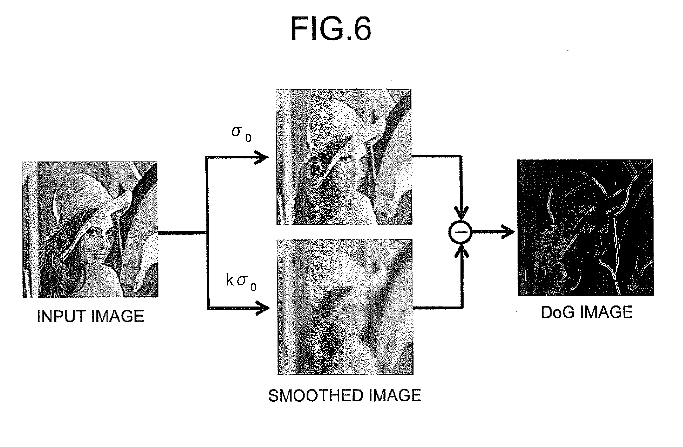

FIG. 6 is a diagram for explaining the scale detection at Step S11. The similar area searching unit 105 obtains a smoothed image L by Equation (1-1) with a Gaussian function G represented by Equation (1-2), and creates a DoG image by obtaining a difference from a smoothed image L with a different $\sigma$ by Equation (1-3), thereby detecting a scale.

[Equation 1-1]

$$L(x,y,\sigma) = G(x,y,\sigma) * I(x,y) \qquad (1)$$

[Equation 1-2]

$$G(x,y,\sigma) = \frac{1}{2\pi\sigma^2} \exp\left(-\frac{x^2 + y^2}{2\sigma^2}\right) \qquad (1-2)$$

[Equation 1-3]

$$D(x,y,\sigma) = L(x,y,k\sigma) - L(x,y,\sigma)$$
$L(x,y,\sigma)$: smoothed image
$I(x,y)$: input image
$G(x,y,\sigma)$: Gaussian function
$D(x,y,\sigma)$: DoG image
$k$: rate of increase

$$(1-3)$$

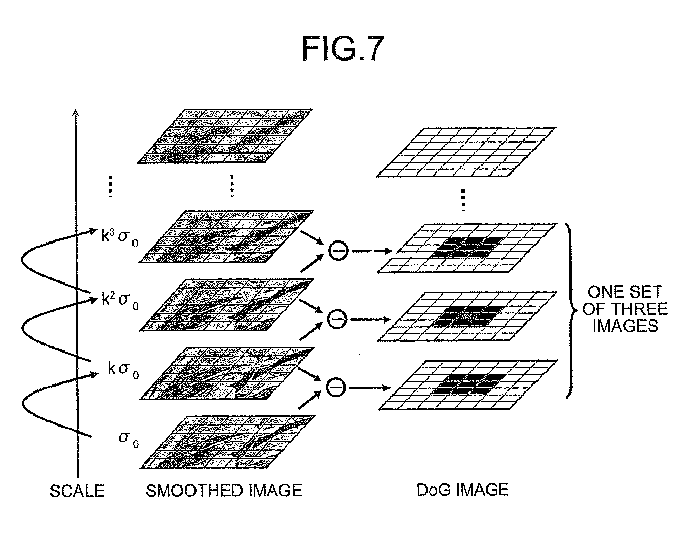

FIG. 7 is a diagram for explaining the keypoint detection at Step S12. The similar area searching unit 105 selects, as the keypoints, pixels whose values detected by the scale detection, that is , the pixel values of the DoG images are extrema (minima or maxima) in the neighborhood (adjacent pixels or adjacent scales). Specifically, as illustrated in FIG. 7, the similar area searching unit 105 compares each of pixel values of DoG pixels as pixels of interest with twenty-six neighbors in the image scale space serving as the neighborhood, and selects pixels whose values are extrema (minima or maxima) as the keypoints. In this case, the similar area searching unit 105 selects, as the keypoints, pixels at the same positions at different scales even when the image sizes are different. To speed up the process, a smoothed image with a large $k\sigma_0$ is replaced with a downsampled image.

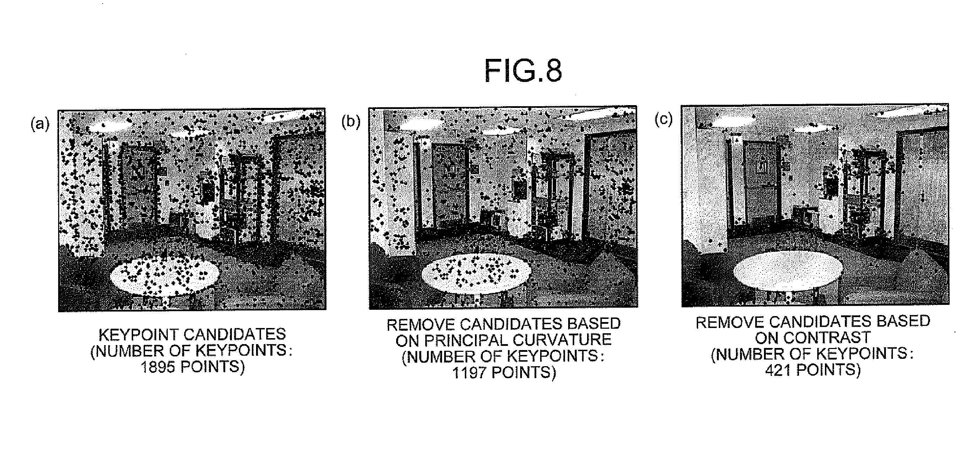

FIGS. 8A to 8C are diagrams for explaining the keypoint localization at Step S13. As illustrated in FIGS. 8A to 8C, the similar area searching unit 105 removes, as the excessively-detected portions, edge portions and low-contrast portions from among the keypoints selected at Step S12. The reason for removing the edge portions is that it is difficult to identify a point with small principal curvature. The similar area searching unit 105 removes the edge portions by using Hessian matrix.

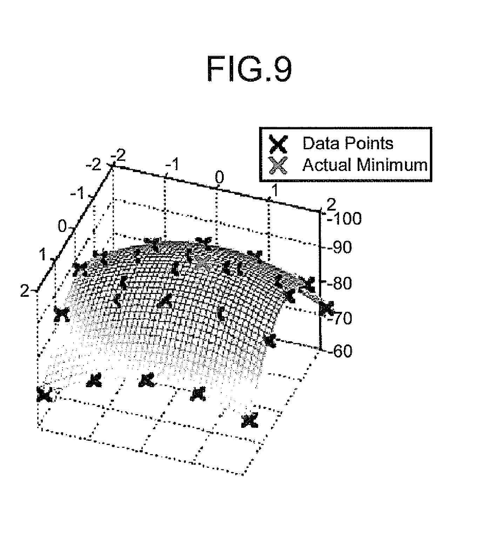

FIG. 9 is a diagram for explaining removal of the low-contrast keypoints. The similar area searching unit 105 estimates the position of a keypoint (a sub-pixel position) with sub-pixel accuracy through curve fitting.

Specifically, the similar area searching unit 105 performs Taylor expansion on a DoG function D(x) at a certain point $x = (x, y, \sigma)^T$ as represented by Equation (2-1). The similar area searching unit 105 obtains a derivative with respect to x as represented by Equation (2-2), sets the derivative equal to zero, and transforms Equation (2-2) into Equation (2-3). The similar area searching unit 105 obtains the sub-pixel position by Equation (2-4).

[Equation (2-1)]

$$D(x) = D + \frac{\partial D^T}{\partial x} x + \frac{1}{2} x^T \frac{\partial^2 D}{\partial x^2} x \qquad (2-1)$$

[Equation (2-2)]

$$\frac{\partial D}{\partial x} + \frac{\partial^2 D}{\partial x^2} \hat{x} = 0 \qquad (2-2)$$

[Equation (2-3)]

$$\frac{\partial^2 D}{\partial x^2} \hat{x} + \frac{\partial D}{\partial x} \qquad (2-3)$$

$$\hat{x} : \text{sub-pixel position} (x, y, \sigma)^T$$

[Equation (2-4)]

$$\hat{x} = \begin{bmatrix} x \\ y \\ \sigma \end{bmatrix} = - \begin{bmatrix} \dfrac{\partial^2 D}{\partial x^2} & \dfrac{\partial^2 D}{\partial xy} & \dfrac{\partial^2 D}{\partial x\sigma} \\ \dfrac{\partial^2 D}{\partial xy} & \dfrac{\partial^2 D}{\partial y^2} & \dfrac{\partial^2 D}{\partial y\sigma} \\ \dfrac{\partial^2 D}{\partial x\sigma} & \dfrac{\partial^2 D}{\partial y\sigma} & \dfrac{\partial^2 D}{\partial \sigma^2} \end{bmatrix}^{-1} \begin{bmatrix} \dfrac{\partial D}{\partial x} \\ \dfrac{\partial D}{\partial y} \\ \dfrac{\partial D}{\partial \sigma} \end{bmatrix}$$

$$\downarrow \qquad\qquad (2-4)$$

$$\text{sub-pixel position}$$

When the output value of the DoG image at the estimated sub-pixel position is equal to or smaller than a predetermined threshold, the similar area searching unit 105 removes the keypoint.

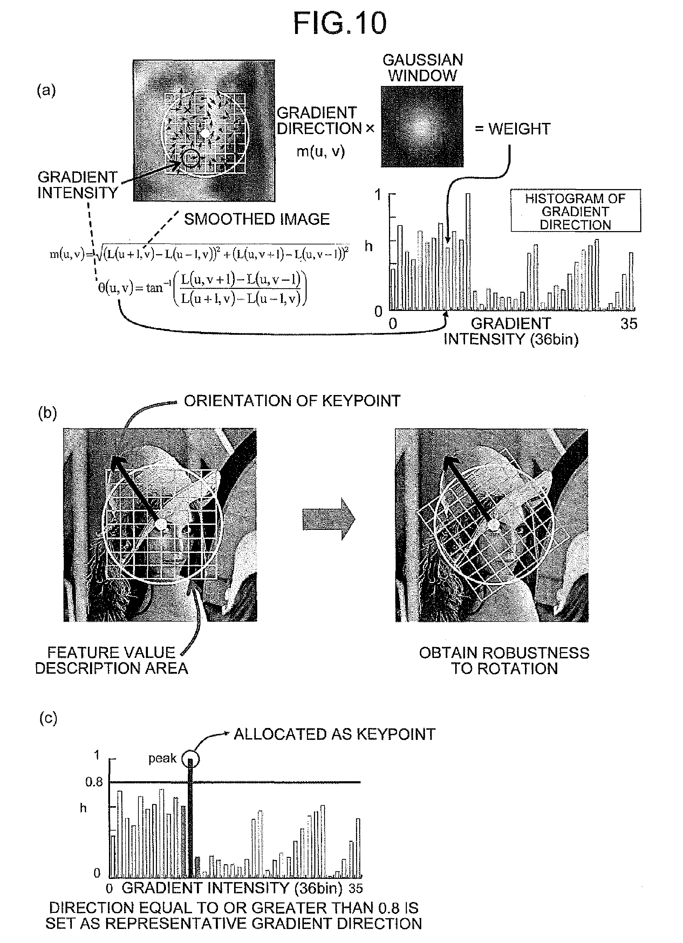

FIGS. 10A to 10C are diagrams for explaining calculation of the orientation at Step S14. The calculation of the orientation is performed at a step in the process, at which a feature value is described for each of the keypoints. The similar area searching unit 105 obtains one representative gradient direction for each of the keypoints according to Equations (3-1) and (3-2) to ensure the robustness to rotation of image data.

[Equation (3-1)]

$$m(u,v) = \sqrt{(L(u+l,v) - L(u-l,v))^2 + (L(u,v+l) - L(u,v-l))^2} \qquad (3\text{-}1)$$

[Equation (3-2)]

$$\theta(u,v) = \tan^{-1}\left(\frac{L(u,v+l) - L(u,v-l)}{L(u+l,v) - L(u-l,v)}\right) \qquad (3\text{-}2)$$

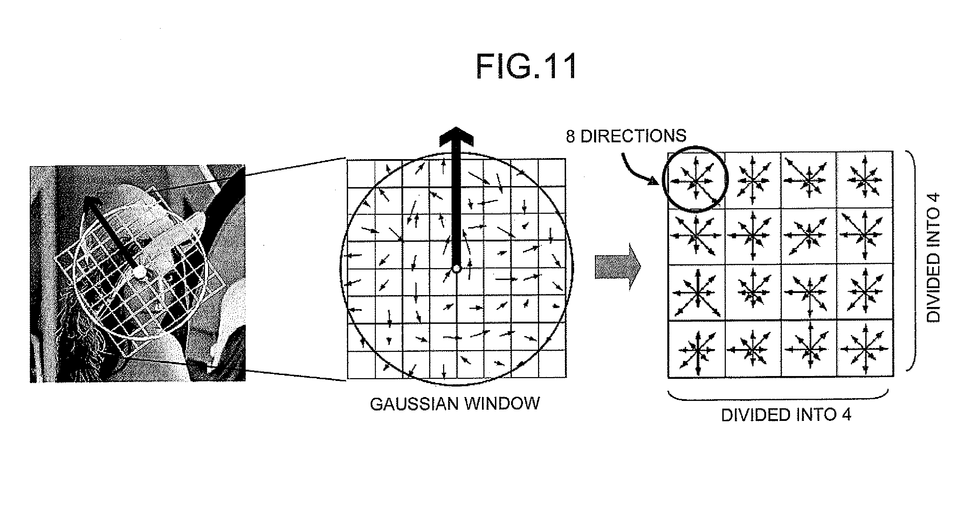

FIG. 11 is a diagram for explaining calculation of the feature vector at Step S15. The similar area searching unit 105 rotates the image data along the orientation. The similar area searching unit 105 divides the rotated image data into blocks of 4 × 4 pixels. The similar area searching unit 105 obtains direction vectors in eight directions in each of the blocks (4 × 4 × 8 = 128-dimensional vectors), and obtains a value, as a SIFT feature value, by normalizing the histogram by the sum of the direction vectors.

The SIFT feature value can be obtained by the process as described above. Details of the calculation of the SIFT feature value can be understood with reference to D. Lowe. Object recognition from local scale-invariant features. In ICCV, 1999. A specific method for calculating a color histogram can be understood with reference to Japanese Patent Application Laid-open No. 2000-187731.

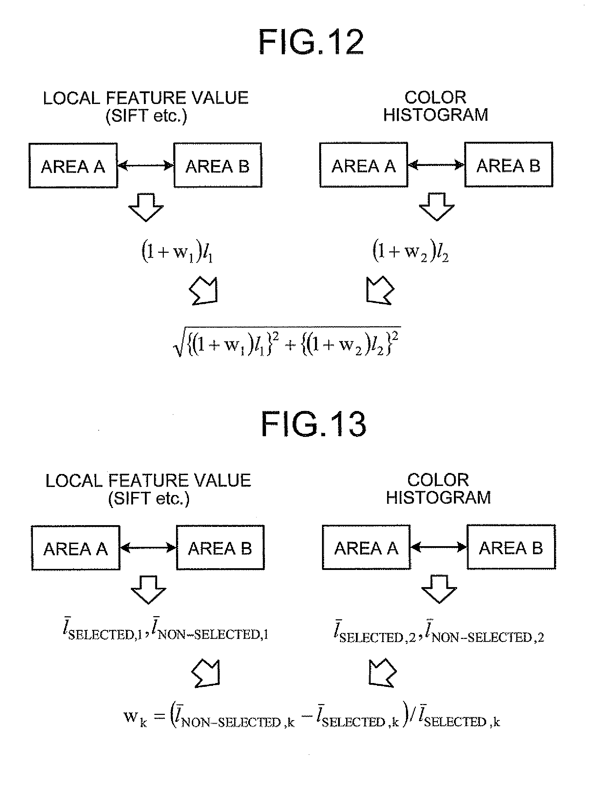

The similarity is an index indicating how much the searched area is similar to the specified target area. FIG. 12 is a diagram for explaining an example of calculation of the similarity. For example, as illustrated in FIG. 12, the similar area searching unit 105 obtains distances based on the local feature value, such as the SIFT feature value, and based on each feature value, such as the color histogram. The similar area searching unit 105 normalizes the distances of the respective feature values according to Expressions (4-1) and (4-2) to add a weight. The similar area searching unit 105 generates a vector with the distances of the respective feature values serving as elements according to Expression (4-3), and sets the length of the vector as the similarity.

[Expression (4-1)]

$$(1 + w_1)l_1 \qquad (4\text{-}1)$$

[Expression (4-2)]

$$(1 + w_2)l_2 \qquad (4\text{-}2)$$

[Expression (4-3)]

$$\sqrt{\{(1 + w_1)l_1\}^2 + \{(1 + w_2)l_2\}^2} \qquad (4\text{-}3)$$

Multiple types of feature values are used for calculating similarity. However, it is satisfactory if feature values to be used are previously set and the types of feature values are not particularly limited.

The similar area searching unit 105 adds a predetermined weight to each of the multiple types of feature values when calculating the similarity between the specified target area and the searched area. The default value of the weighting value given to each of the multiple types of feature values is constant, i.e., zero, and the type of feature value equally contributes to the similarity.

As described in Japanese Patent Publication No. 4148642, the similar area searching unit 105 extracts multiple searched areas from image data by color clustering and generates a tree structure having multiple hierarchies from the searched areas. On the basis of the feature values acquired for each searched area contained in each hierarchy of the generated tree structure and the feature values acquired from the specified target area, search results showing similar areas are obtained. The searched areas consist of multiple area images that are extracted by color clustering of the image data and an integrated area image obtained by integrating the extracted area images depending on whether there is an edge. The similar area searching unit 105 obtains similar areas as the search result that indicates, in the tree structure, the relationship between the area images and the integrated area image and that is obtained by, when the area images and the integrated area image belong to the same tree structure, eliminating unnecessary searched areas while taking the relationship between the areas in the tree structure into consideration.

As another example, the similar area searching unit 105 may detect a similar area by using the method described in Japanese Patent Publication No. 4333902. As described above, it is satisfactory if the similar area searching unit 105 searches for similar areas on the basis of the feature values of the specified target area, and specific methods for searching for similar areas are not particularly limited.

On the basis of the information received by the receiving unit 104, the weight changing unit 106 automatically and appropriately changes the value of the weight used by the similar area searching unit 105 according to predetermined rules. FIG. 13 is a diagram for explaining an example of a change in the weight. For example, as illustrated in FIG. 13, the weight changing unit 106 obtains distances based on the local feature value, such as the SIFT feature value, and based on each feature value, such as the color histogram. The weight changing unit 106 obtains an average of the distances of the respective feature values for each of a selected object and a non-selected object by normalizing the distances of the respective features values according to Expressions (5-1) and (5-2). The weight changing unit 106 subtracts the average of the selected object from the average of the non-selected object according to Equation (5-3), and sets the ratio as a new weight.

[Expression (5-1)]

$$\bar{l}_{\text{selected},1}, \bar{l}_{\text{non-selected},1} \tag{5-1}$$

[Expression (5-2)]

$$\bar{l}_{\text{selected},2}, \bar{l}_{\text{non-selected},2} \tag{5-2}$$

[Equation (5-3)]

$$w_k = \left(\bar{l}_{\text{non-selected},k} - \bar{l}_{\text{selected},k}\right) / \bar{l}_{\text{selected},k} \tag{5-3}$$

On the basis of the final specified number that is received by the receiving unit 104, the displayed-candidate number determining unit 107 determines a displayed-candidate number. The displayed-candidate number is the number of similar areas that are displayed on the display unit so that the user can select target areas. In the image processing apparatus 100 according to the embodiment, a target area specified by the user can be received. Furthermore, when the receiving unit 104 receives a specified target area, similar areas similar to the specified target area are displayed on the display unit as target-area candidates similar to the specified target area, which allows the user to select similar areas as target areas. A displayed-candidate number is the number of similar areas serving as target-area candidates that are displayed on the display unit when the user selects target areas. The displayed-candidate number may be input by the user and received by the receiving unit 104.

Specifically, the displayed-candidate number determining unit 107 determines 1.5 times the final specified number as the displayed-candidate number. It is satisfactory if the displayed-candidate number is determined on the basis of the final specified number. Specific methods for determining a displayed-candidate number are not limited to the method of the embodiment. It is preferable that the displayed-candidate number determining unit 107 determines a number larger than the final specified number as a displayed-candidate number.

The candidate area selecting unit 108 selects, as similar areas that should be displayed on the display unit, similar areas equal in number to the displayed-candidate number determined by the displayed-candidate number determining unit 107 from among the multiple similar areas that are detected by the similar area searching unit 105. The candidate area selecting unit 108 selects similar areas equal in number to the displayed-candidate number in, for example, a descending order of similarity.

On the basis of the information received by the receiving unit 104, the repetition determining unit 109 determines whether the similar area searching unit 105 re-performs similar-area searching. When the repetition determining unit 109 determines that similar area searching is to be re-performed, the repetition determining unit 109 instructs the weight changing unit 106 to change the weighting value and instructs the similar area searching unit 105 to search for similar areas.

By changing the brightness of an area that is selected as a target area by the user, the brightness changing unit 110 creates, from the image data, imaged image data for displaying an imaged image to which a special effect is applied on the display unit.

The special effect processor 111 creates print image data in which areas to which clear toner are applied are specified in the image data and stores the print image data in the storage unit 120 such that the image forming apparatus (not shown) can apply the special effect, i.e., apply clear toner to the target areas in the image data, which are the target areas selected by the user.

As described above, in addition to the image data acquired by the image data acquiring unit 101 and the print image data that is created by the special effect processor 111, the storage unit 120 stores information that is referred to by each unit of the image processing apparatus 100, such as a final specified number and a displayed-candidate number that are input by the user and received by the receiving unit 104, and the weighting value referred to by the similar area searching unit 105.

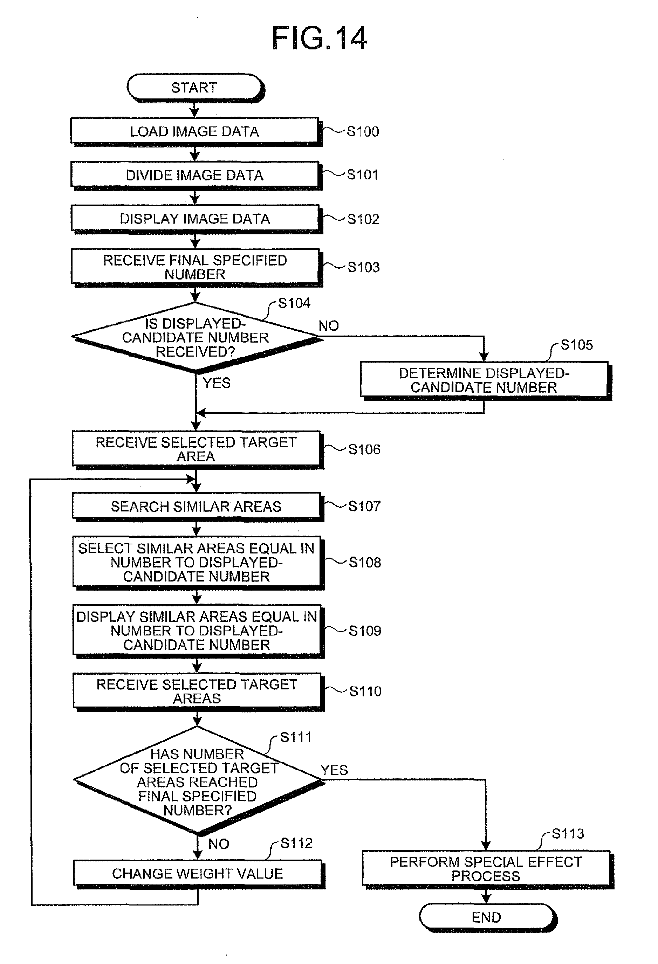

FIG. 14 is a flowchart of the image processing performed by the image processing apparatus 100. In the image processing, first, the image data acquiring unit 101 acquires image data to be processed from, for example, a file and loads the image data into the storage unit 120 (step S100). The divider 102 then divides the image data according to the predetermined rules (step S101). The display processor 103 displays the image data on the display unit (step S102). The display processor 103 displays the image data on which a boundary line is superposed on boundary positions between part areas that are divided by the divider 102. Accordingly, the user can determine the boundary between the part areas. In the flowchart, the image processing apparatus 100 divides the image data immediately after the image is loaded; however, this is not limited thereto. For example, the image processing apparatus 100 may be configured such that the image processing apparatus 100 does not divide the image data at the above timing but performs an image data dividing process for each detected area after obtaining a result of searching for similar areas.

The receiving unit 104 receives a final specified number that is input by the user (step S103). When the receiving unit 104 receives a displayed-candidate number that is input by the user (YES at step S104), the process goes to step S106. In contrast, when the receiving unit 104 does not receive any displayed-candidate number input by the user (NO at step S104), the displayed-candidate number determining unit 107 determines a displayed-candidate number on the basis of the final specified number received by the receiving unit 104 (step S105). The displayed-candidate number determined by the displayed-candidate number determining unit 107 is a number larger than the final specified number. At step S104, when a displayed-candidate number that is input by the user is received, it is preferable that there is a prompt for an input of a displayed-candidate number larger then the final specified number by, for example, displaying on the display unit information giving an instruction for inputting a value larger than the final specified number.

The receiving unit 104 receives a predetermined area selected by the user as a target area (step S106). The number of target areas selected by the user may be one or a small number equal to 2 or more. For example, when the user specifies a point in the part areas, a part area containing the point is selected as a target area. Displaying part areas as described above allows the user to easily select a target area. The user may specify a target area by, instead of selecting a part area, performing an operation of tracing the periphery of an area to which the user wants to apply a special effect (target area) by using a user interface, such as a mouse. The user may specify a target area by specifying the apex of a rectangular area that is an area to which the user wants to apply the special effect. Alternatively, the user may specify a target area and areas other then the specified target area by inputting a white marker by a left click of the mouse for an area to which the user wants to apply a special effect and by inputting a red marker by a right click of the mouse for areas to which the special effect is not to be applied.

The similar area searching unit 105 searches for similar areas similar to the specified target area received by the receiving unit 104 (step S107). Specifically, the similar area searching unit 105 extracts searched areas from among areas other than the specified target area in the image data. The similar area searching unit 105 extracts a feature value from the specified target area and feature values from the searched areas and calculates the similarity of the searched areas on the basis of the feature values of the specified target area and the searched areas. The similar area searching unit 105 detects searched areas as similar areas when the similarity is equal to or more than a threshold. Examples of the feature value include a local feature value, such as a SIFT feature value or a SURF feature value, with regard to local gradient of contrast; the color histogram and the pixel value of each pixel contained in a target area with regard to color; a statistic based on the co-occurrence matrix with regard to texture; the central moment characteristic with regard to shape; and the curve characteristic of the outer shape with regard to curvature. The methods for calculating the SIFT feature value as the local feature value and calculating the color histogram are the same as described above. Multiple types of feature values are used for calculating similarity. However, it is satisfactory if feature values to be used are previously set and the types of feature values are not particularly limited.

From among the similar areas that are detected by the similar area searching unit 105, the candidate area selecting unit 108 then selects similar areas equal in number to the displayed-candidate number that is received by the receiving unit 104 or equal in number to the displayed-candidate number that is determined by the displayed-candidate number determining unit 107 (step S108). In the embodiment, the candidate area selecting unit 108 selects similar areas equal in number to the displayed-candidate number in a descending order of similarity.

The display processor 103 displays the similar areas that are equal in number to the displayed-candidate number and that is selected by the candidate area selecting unit 108 on the display unit (step S109). Accordingly, the user can browse the similar areas that are displayed on the display unit and that serve as target-area candidates and can select target areas to which the user wants to apply the special effect from among the displayed similar areas.

When the user selects certain similar areas as areas to which the user wants to apply the special effect (target areas), the receiving unit 104 receives the selected target areas (step S110). The repetition determining unit 109 then compares the number of selected target areas that are received by the receiving unit 104 and the final specified number that is received by the receiving unit 104. When the number of selected target areas has not reached the final specified number (NO at step S111), the weight changing unit 106 is instructed to change the weight and the similar area searching unit 105 is instructed to search for similar areas again.

The weight changing unit 106 then changes the value of the weight for the multiple types of feature values that are used by the similar area searching unit 105 (step S112). Specifically, the weighting value for each feature value is automatically changed on the basis of the similar areas selected by the user as target areas at step S110 and the feature values of similar areas that are not selected by the user. Specifically, as described above, the weight changing unit 106 can change the weight by obtaining distances based on respective feature values, normalizes the distances of the features values, obtaining averages of the distances of the feature values for each of the selected object and the non-selected object, and subtracting the average of the selected object from the average of the non-selected object. Alternatively, the weight changing unit 106 may calculate a posterior probability of each characteristic amount according to the Bayes' theorem from the likelihood information on the multiple types of feature values. The weight changing unit 106 then calculates a new weighting value on the basis of the calculated posterior probability. The detailed weighting value calculating process can be understood with reference to, for example, Japanese Patent Publication No. 4333902. Alternatively, the weight changing unit 106 may calculate a weighting value by using the method described in Japanese Patent Application Laid-open No. 09-101970.

The process returns to step S107 where the similar area searching unit 105 searches for similar areas again by using the weighting value that is changed at step S112 (step S107).

As described above, when target areas equal in number to the final specified number are not selected from among the similar areas searched for as a result of searching for similar areas once, the weight changing unit 106 changes, on the basis of the feature values of the similar areas selected by the user as target areas and the feature values of the not-selected similar areas, the weight of the feature values used for similar area searching, and the similar area searching unit 105 then again searches for similar areas on the basis of the feature values to which the changed weight is added. Accordingly, in similar area searching for the second and following times, the result of selecting target areas by the user from among similar areas searched for as a result of the last similar area searching can be reflected and thus areas closer to the area intended as a target area by the user can be detected as similar areas.

In contrast, when the number of selected target areas has reached the final specified number (YES at step S111), target area selecting ends and subsequently the special effect processor 111 performs a process on all of the selected target areas such that the image forming apparatus can apply the special effect to the target areas, and the special effect processor 111 then outputs the processed print image data to the image forming apparatus (step S113). In this manner, the image processing performed by the image processing apparatus 100 ends.

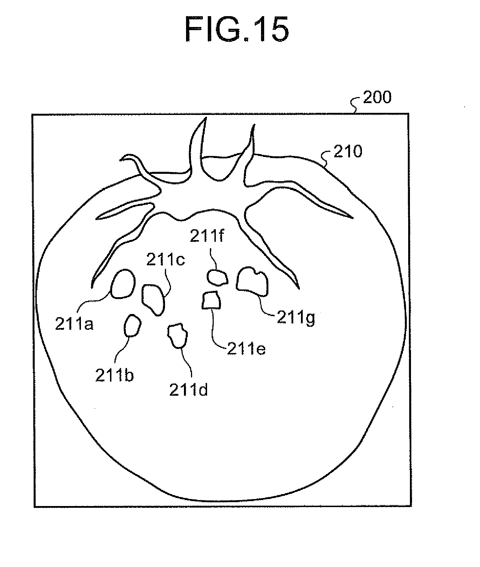

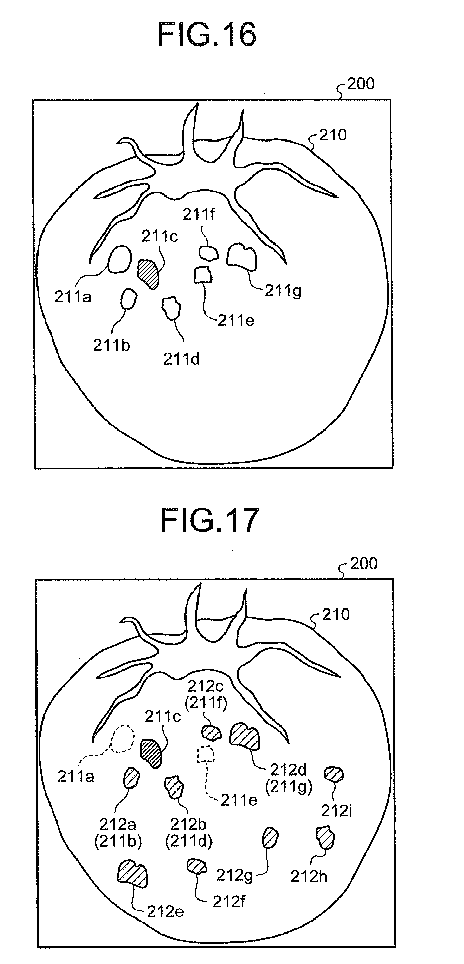

The image processing in FIG. 14 performed by the image processing apparatus 100 on image data 200 in FIG. 15 will be specifically described. FIGS. 16 to 18 are diagrams of images that are displayed on the display unit during image processing.

The image data 200 shown in FIG. 15 indicates a tomato. Seven water droplets 211a to 211g are on a tomato 210. The user specifies the areas of the seven water droplets as target areas to which a special effect is applied.

In image processing, the image data 200 is loaded (step S100), the image data 200 is divided (step S101), and the image data 200 is displayed on the display unit (step S102). At step S103 and step S104, the user inputs 7 as a final specified number and inputs 10 as a displayed-candidate number.

As described above, in the image processing described with reference to FIG. 14, all target areas that the user wants to finally extract are not necessarily detected when similar area are searched for once. If it assumed that unintended areas are also detected as similar areas, by repeating the selecting of target areas by the user and the searching for similar areas, target areas equal in number to a final specified number are selected. For this reason, it is preferable that as many similar areas be displayed as possible by specifying a value larger than the final specified number as a displayed-candidate number in order that desired target areas more numerous are displayed. However, if the displayed-candidate number is too large, many unnecessary similar areas are displayed, which makes it difficult for the user to select the desired target areas and thus it is not preferable. An appropriate displayed-candidate number depends on the quality of image data, etc.

In the example, 7 is specified as a final specified number while 10 is specified as a displayed-candidate number. However, a preferable displayed-candidate number varies depending on image data to be processed. Thus, the user may appropriately change the displayed-candidate number while selecting target areas at steps S107 to S112. At steps S107 to S112, a displayed-candidate number changing instruction that is input by the user can be received. Once the receiving unit 104 receives a displayed-candidate number changing instruction, the displayed-candidate number is changed according to the displayed-candidate number changing instruction received by the receiving unit 104 and a process based on the changed displayed-candidate number is performed in the subsequent image processing.

Furthermore, as shown in FIG. 16, the user selects a water droplet 211c as a target area at step S106. In this case, at step S107, the similar area searching unit 105 searches for similar areas similar to the water droplet 211c. FIG. 17 is a diagram illustrating nine similar areas 212a to 212i that are detected by the similar area searching unit 105 at step S107 selected by the candidate area selecting unit 108 at step S108, and displayed at step S109. In the embodiment, the nine similar areas 212a to 212i less in number than 10, which is the displayed-candidate number, by 1 are displayed such that the total areas including the area of the water droplet 211c, which is specified as a target area by the user, and the nine similar areas 212a to 212i are equal in number to the displayed-candidate number.

In the example shown in FIG. 17, two water droplets 211a and 211e from among the seven water droplets 211a to 211g are not detected as similar areas and thus are not displayed on the display unit at step S109. Because the accuracy of searching for similar areas depends on image data, there may be water droplets that are not detected as similar areas and areas different from actual droplets may be detected as similar areas when similar areas are searched for once as in the example shown in Fig. 17. For this reason, the image processing apparatus 100 according to the embodiment repeats searching for similar areas and selecting of target areas.

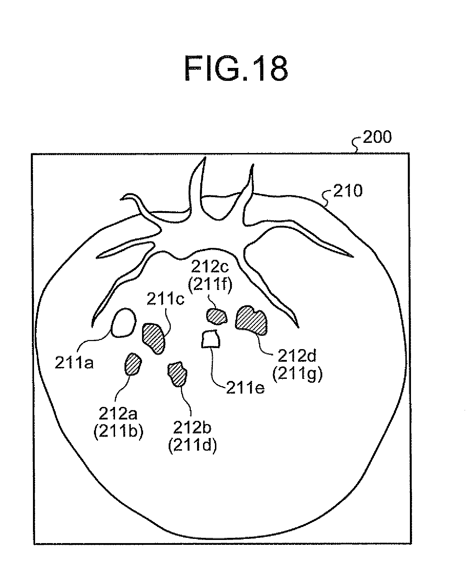

At step S110, the user selects, as target areas, four similar areas 212a to 212d that coincide with the water droplets 211b, 211d, 211f, and 211g from among the similar areas 212a to 212i shown in FIG. 17. FIG. 18 shows the target areas selected by the user. In the example shown in FIG. 18, the five water droplets 211b, 211c, 211d, 211f, and 211g from among the seven water droplets are selected while the remaining two water droplets 211a and 211e are not displayed as similar areas and are not selected as target areas. When the weighting value is changed again in the routine process and similar area searching is performed and if these two water droplets 211a and 211e are detected as similar areas, the water droplets 211a and 211e are displayed on the display unit at step S109 and thus the user can select them.

When the total number of the water droplet 211c that is selected as a target area by the user at step S106 and the target areas that are selected at step S110 reaches the final specified number (YES at step S111), the process goes to step S113 where the special effect process is performed on the target areas and the process ends.

Furthermore, during the image processing described with reference to FIG. 14, etc., the image data and the image including target areas that is displayed on the display unit can be displayed as image data or as an image that is appropriately enlarged or reduced. Specifically, when an enlarging instruction or a reducing instruction is input by the user, the display processor 103 displays the displayed image as an image that is appropriately enlarged or reduced according to the enlarging instruction or the reducing instruction received by the receiving unit 104. This makes it easier for the user to see a detailed part or to specify a detailed part.

During image processing, when the receiving unit 104 receives an image display instruction from the user, the brightness changing unit 110 changes, upon reception of the image display instruction, the brightness of target areas that are selected by the user and creates imaged image data. The display processor 103 displays the imaged image that is the image data whose brightness has been changed by the brightness changing unit 110. Accordingly, because the imaged image in which a clear toner is applied on a printed image can be appropriately displayed on the display unit, the user can select target areas while checking the image applied with the clear toner without having to actually make a print out when target areas are selected using the image processing apparatus 100.

It is assumed that the images of the target areas in image data, which are target areas to which the user wants to apply a special effect, are similar to each other. Thus, as described above, regarding the image processing apparatus 100 according to the embodiment, the user selects a small number of target areas and similar areas similar to the selected target area are displayed on the display unit as candidate areas that are candidates for target areas to which the special effect is to be applied. Namely, in the embodiment, the user specifies the number of areas, candidates for areas are extracted according to the specified number, and feedback is given on the order of the candidates for the areas after a selection is received from the user. Accordingly, when the user wants to specify many target areas, the user can select many target areas by performing a simple operation of selecting desired areas from among similar areas that are candidates target areas displayed on the display unit without performing a time-consuming operation to select target areas one by one.

In another example, the image processing apparatus 100 does not have to include the divider 102. In this case, it is satisfactory if image data that is not divided is displayed at step S102 following the image data loading (step S100) that is described with reference to FIG. 14. Regarding selecting of target areas, it is satisfactory if the user selects desired areas as target areas.

The image processing apparatus 100 according to the embodiment includes a control device such as a CPU; a storage device such as a read only memory (ROM) or a RAM; an external storage device such as an HDD or a CD drive device; a display device such as a display; and an input device such as a keyboard and a mouse. The image processing apparatus 100 is hardware configured as a normal computer.

The program executed by the image processing apparatus 100 according to the embodiment is recorded in an installable format or an executable format in a computer-readable recording medium, such as a CD-RM, a flexible disk (FD), a CD-R, or a digital versatile disk (DVD).

A program that is executed by the image processing apparatus 100 according to the embodiment may be stored in a computer that is connected to a network such as the Internet such that the program can be provided by downloading it via the network. Alternatively, the program executed by the image processing apparatus 100 according to the embodiment may be provided or distributed via a network such as the Internet. Alternatively, the program of the embodiment may be provided by previously installing in a ROM, etc.

The program executed by the image processing apparatus 100 according to the present embodiment is configured as a module including each of the above-described units (the image data acquiring unit, divider, display processor, receiving unit, similar area searching unit, weight changing unit, displayed-candidate number determining unit, candidate area selecting unit, repetition determining unit, brightness changing unit, and special effect processor). A CPU (processor) that is actual hardware reads the program from the storage medium and executes the program so that the above-listed units are loaded in the main storage device and thus the image data acquiring unit, divider, display processor, receiving unit, similar area searching unit, weight changing unit, displayed-candidate number determining unit, candidate area selecting unit, repetition determining unit, brightness changing unit, and special effect processor are generated in the main storage device.

According to the present invention, when a receiving unit receives at least one target area to which a special effect is to be applied, which is at least one target area specified by a user in image data that is displayed on a display unit, a similar area searching unit automatically detects similar areas similar to the target area as target-area candidates to which the special effect is applied and a display processor displays, on the display unit, a predetermined number of similar areas from among the detected similar areas and gives feedback on the order of object-area candidates after reception of a selection from the user. Accordingly, even if the user wants to apply the special effect to many areas, it is not required to select all the target areas in the image data one by one and multiple areas to which the user wants to apply the special effect can be selected by performing a simple operation to select the desired areas as target areas from among a limited number of displayed similar areas.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

**Claims**

1. An image processing apparatus comprising:

   a target area receiving unit (104) that receives at least one target area to which a special effect is to be applied, the target area being specified by a user in image data displayed on a display unit;
   a similar area searching unit (105) that searches for similar areas that are image areas similar to the specified target area from among the image data on the basis of a feature value indicating an image characteristic of the specified target area that is received by the target area receiving unit (104);
   a display processor (103) that displays, on the display unit, a predetermined number of similar areas from among the similar areas that are detected by the similar area searching unit (105);
   a similar area receiving unit (104) that receives desired similar areas that are selected by the user from among the predetermined number of similar areas displayed on the display unit; and
   a special effect processor (111) that performs a special effect process for applying the special effect to the selected similar areas that are received by the similar area receiving unit (104) and the specified target area.

2. The image processing apparatus according to claim 1, further comprising a display number receiving unit that receives the number of similar areas to be displayed, which is the number specified by the user,
   wherein the display processor (103) displays, on the display unit, the similar areas that is equal in number to the number of similar areas to be displayed.

**3.** The image processing apparatus according to claim 1, wherein
the similar area searching unit (105) detects the similar areas on the basis of multiple types of feature value to each of which a pre-set weight is added,
the image processing apparatus further comprising:

a final specified number receiving unit that receives a final specified number that is the number of similar areas that should be specified as the target areas, the final specified number being input by the user; and
a weight changing unit (106) that, when the number of selected similar areas received by the similar area receiving unit (104) is smaller than the final specified number, changes the weight for the feature value on the basis of the selected similar areas that are received by the similar area receiving unit (104), wherein
when the weight changing unit (106) changes the weight, the similar area searching unit (105) detects the similar areas on the basis of the multiple types of feature value to which the weight that is changed by the weight changing unit (106) is added,
the display processor (103) displays the similar areas after the change of the weight by the weight changing unit (106), and
the similar area receiving unit (104) receives selected similar areas after the change of the weight by the weight changing unit (106),
the image processing apparatus further comprising a repetition determining unit (109) that instructs the weight changing unit (106) to change the weight until the number of selected images received by the similar area receiving unit (104) becomes equal to the final specified number,
wherein, when the repetition determining unit (109) instructs the weight changing unit (106) to change the weight, the weight changing unit (106) changes the weight for the feature value.

**4.** The image processing apparatus according to claim 3, further comprising:

a display number determining unit (107) that determines, on the basis of the final specified number, the number of similar areas to be displayed by the display processor (103) on the display unit,
wherein the display processor (103) displays the similar areas that is equal in number to the number of similar areas to be displayed that is determined by the display number determining unit (107).

**5.** The image processing apparatus according to any one of claims 1 to 4, further comprising a divider (102) that divides the image data to multiple part areas according to predetermined rules,
wherein the target area receiving unit (104) receives specified part areas as the target areas.

**6.** The image processing apparatus according to any one of claims 1 to 5, further comprising a display change receiving unit that receives an enlarged display instruction or a reduced display instruction from the user,
wherein, according to the enlarged display instruction or reduced display instruction that is received by the display change receiving unit, the display processor (103) displays the image data displayed on the display unit as enlarged image data or reduced image data.

**7.** The image processing apparatus according to any one of claims 1 to 6, further comprising a brightness changing unit (110) that creates imaged image data for displaying, on the display unit, an image to which the special effect is to be applied by changing the brightness of the image data of the selected similar areas received by the similar area receiving unit (104).

**8.** An image processing method performed by an image processing apparatus, the image processing method comprising:

by a target area receiving unit (104), receiving at least one target area to which a special effect is to be applied, the target area being specified by a user in image data displayed on a display unit;
by a similar area searching unit (105), searching for similar areas that are image areas similar to the specified target area from among the image data on the basis of a feature value indicating an image characteristic of the specified target area that is received at the receiving step;
by a display processor (103), displaying, on the display unit, a predetermined number of similar areas from among the similar areas that are detected at the searching step;
by a similar area receiving unit (104), receiving desired similar areas that are selected by the user from among the predetermined number of similar areas displayed on the display unit; and

by a special effect processor (111), performing a special effect process for applying the special effect to the selected similar areas that are received at the receiving step and the specified target area.

9. The image processing method according to claim 8, further comprising,
receiving, by a display number receiving unit (103), the number of similar areas to be displayed, which is the number specified by the user,
wherein, displaying, by the display processor, on the display unit, the similar areas that is equal in number to the number of similar areas to be displayed.

10. The image processing method according to claim 8, wherein
detecting, by the similar area searching unit (105), the similar areas on the basis of multiple types of feature value to each of which a pre-set weight is added,
the image processing method further comprising:

receiving, by a final specified number receiving unit, a final specified number that is the number of similar areas that should be specified as the target areas, the final specified number being input by the user; and
when the number of selected similar areas received by the similar area receiving unit (104) is smaller than the final specified number, changing, by a weight changing unit (106), the weight for the feature value on the basis of the selected similar areas that are received by the similar area receiving unit (104),
wherein
when the weight is changed by the weight changing unit (106), detecting, by the similar area searching unit (105), the similar areas on the basis of the multiple types of feature value to which the weight that is changed by the weight changing unit (106) is added,
displaying, by the display processor (103), the similar areas after the change of the weight by the weight changing unit (106), and
receiving, by the similar area receiving unit (104), selected similar areas after the change of the weight by the weight changing unit (106),
the image processing method further comprising, instructing, by a repetition determining unit (109), the weight changing unit (106) to change the weight until the number of selected images received by the similar area receiving unit (104) becomes equal to the final specified number,
wherein, when the weight changing unit (106) is instructed, by the repetition determining unit (109), to change the weight, changing the weight for the feature value by the weight changing unit (106).

11. The image processing method according to claim 10, further comprising:

determining, by a display number determining unit (107), on the basis of the final specified number, the number of similar areas to be displayed by the display processor (103) on the display unit,
wherein displaying, by the display processor (103), the similar areas that is equal in number to the number of similar areas to be displayed that is determined by the display number determining unit (107).

12. The image processing method according to any one of claims 8 to 11, further comprising,
dividing, by a divider (102), the image data to multiple part areas according to predetermined rules,
wherein receiving, by the target area receiving unit (104), specified part areas as the target areas.

13. The image processing method according to any one of claims 8 to 12, further comprising,
receiving, by a display change receiving unit, an enlarged display instruction or a reduced display instruction from the user,
wherein, according to the enlarged display instruction or reduced display instruction that is received by the display change receiving unit, displaying, by the display processor (103), the image data displayed on the display unit as enlarged image data or reduced image data.

14. The image processing method according to any one of claims 8 to 13, further comprising,
creating, by a brightness changing unit (110), imaged image data for displaying, on the display unit, an image to which the special effect is to be applied by changing the brightness of the image data of the selected similar areas received by the similar area receiving unit (104).

15. A computer program product comprising a non-transitory computer-usable medium for causing a computer to function as:

a target area receiving unit (104) that receives at least one target area to which a special effect is to be applied, the target area being specified by a user in image data displayed on a display unit;

a similar area searching unit (105) that searches for similar areas that are image areas similar to the specified target area from among the image data on the basis of a feature value indicating an image characteristic of the specified target area that is received by the target area receiving unit (104);

a display processor (103) that displays, on the display unit, a predetermined number of similar areas from among the similar areas that are detected by the similar area searching unit (105);

a similar area receiving unit (104) that receives desired similar areas that are selected by the user from among the predetermined number of similar areas displayed on the display unit; and

a special effect processor (111) that performs a special effect process for applying the special effect to the selected similar areas that are received by the similar area receiving unit (104) and the specified target area.

# FIG.1

IMAGE PROCESSING APPARATUS — 100

101 — IMAGE DATA ACQUIRING UNIT

102 — DIVIDER

103 — DISPLAY PROCESSOR

104 — RECEIVING UNIT

120 — STORAGE UNIT
- IMAGE DATA
- PRINT IMAGE DATA
- FINAL SPECIFIED NUMBER
- DISPLAYED-CANDIDATE NUMBER
- WEIGHTING VALUE

105 — SIMILAR AREA SEARCHING UNIT

106 — WEIGHT CHANGING UNIT

107 — DISPLAYED-CANDIDATE NUMBER DETERMINING UNIT

108 — CANDIDATE AREA SELECTING UNIT

109 — REPETITION DETERMINING UNIT

110 — BRIGHTNESS CHANGING UNIT

111 — SPECIAL EFFECT PROCESSOR

# FIG.2

START

LOAD IMAGE DATA — S1

DISPLAY IMAGE DATA — S2

INPUT AND DISPLAY OUTER FRAME — S3

CREATE FOREGROUND MODEL AND BACKGROUND MODEL BY SAMPLING PIXEL VALUE DATA OF BACKGROUND FROM OUTER FRAME LINE AND BY SAMPLING PIXEL VALUE DATA OF FOREGROUND FROM WHOLE INSIDE OF OUTER FRAME — S4

AUTOMATICALLY DIVIDE IMAGE INTO AREAS BY USING OUTER FRAME LINE AS BACKGROUND SEED AND BY USING ONLY PIXELS INSIDE OUTER FRAME AS OBJECT TO BE PROCESSED — S5

DISPLAY AUTOMATICALLY-DIVIDED RESULT — S6

END

# FIG.3

AUTOMATIC
SEGMENTATION
USING FOREGROUND
AND BACKGROUND
MODELS

SAMPLE PIXEL VALUE DATA
OF BACKGROUND FROM
OUTER FRAME LINE

SAMPLE PIXEL VALUE
DATA OF FOREGROUND
FROM WHOLE INSIDE OF
OUTER FRAME LINE

FOREGROUND AND
BACKGROUND MODELS

EP 2 570 971 A2

# FIG.4

(a)

(b)

BACKGROUND t

FOREGROUND s

(c)

# FIG.5

```
            ┌─────────────┐
            │    START    │
            └─────────────┘
                   │
                   ▼
   ┌──────────────────────────────┐
   │        DETECT SCALES         │──S11
   └──────────────────────────────┘
                   │
                   ▼
   ┌──────────────────────────────┐
   │  DETECT SCALES AND KEYPOINTS │──S12
   └──────────────────────────────┘
                   │
                   ▼
   ┌──────────────────────────────┐
   │       LOCALIZE KEYPOINTS     │──S13
   └──────────────────────────────┘
                   │
                   ▼
   ┌──────────────────────────────┐
   │     CALCULATE ORIENTATION    │──S14
   └──────────────────────────────┘
                   │
                   ▼
   ┌──────────────────────────────┐
   │   CALCULATE FEATURE VECTOR   │──S15
   └──────────────────────────────┘
                   │
                   ▼
            ┌─────────────┐
            │     END     │
            └─────────────┘
```

# FIG.6

$\sigma_0$

$k\sigma_0$

INPUT IMAGE

SMOOTHED IMAGE

DoG IMAGE

# FIG.7

SCALE     SMOOTHED IMAGE     DoG IMAGE

ONE SET OF THREE IMAGES

$k^3 \sigma_0$

$k^2 \sigma_0$

$k \sigma_0$

$\sigma_0$

FIG.8

(a) KEYPOINT CANDIDATES (NUMBER OF KEYPOINTS: 1895 POINTS)

(b) REMOVE CANDIDATES BASED ON PRINCIPAL CURVATURE (NUMBER OF KEYPOINTS: 1197 POINTS)

(c) REMOVE CANDIDATES BASED ON CONTRAST (NUMBER OF KEYPOINTS: 421 POINTS)

23

# FIG.9

# FIG.10

(a)

GRADIENT
DIRECTION ×
m(u, v)

GAUSSIAN
WINDOW

= WEIGHT

GRADIENT
INTENSITY

SMOOTHED IMAGE

$$m(u,v) = \sqrt{(L(u+1,v) - L(u-1,v))^2 + (L(u,v+1) - L(u,v-1))^2}$$

$$\theta(u,v) = \tan^{-1}\left(\frac{L(u,v+1) - L(u,v-1)}{L(u+1,v) - L(u-1,v)}\right)$$

h

HISTOGRAM OF
GRADIENT
DIRECTION

GRADIENT
INTENSITY (36bin)

(b)

ORIENTATION OF KEYPOINT

FEATURE VALUE
DESCRIPTION AREA

OBTAIN ROBUSTNESS
TO ROTATION

(c)

ALLOCATED AS KEYPOINT

peak

h

GRADIENT INTENSITY (36bin)

DIRECTION EQUAL TO OR GREATER THAN 0.8 IS
SET AS REPRESENTATIVE GRADIENT DIRECTION

# FIG.11

8 DIRECTIONS

GAUSSIAN WINDOW

DIVIDED INTO 4

DIVIDED INTO 4

# FIG.12

LOCAL FEATURE VALUE
(SIFT etc.)

| AREA A | ↔ | AREA B |

⇩

$$(1 + w_1)l_1$$

⇦

COLOR
HISTOGRAM

| AREA A | ↔ | AREA B |

⇩

$$(1 + w_2)l_2$$

⇨

$$\sqrt{\{(1 + w_1)l_1\}^2 + \{(1 + w_2)l_2\}^2}$$

# FIG.13

LOCAL FEATURE VALUE
(SIFT etc.)

| AREA A | ↔ | AREA B |

⇩

$$\bar{l}_{\text{SELECTED},1}, \bar{l}_{\text{NON-SELECTED},1}$$

⇦

COLOR
HISTOGRAM

| AREA A | ↔ | AREA B |

⇩

$$\bar{l}_{\text{SELECTED},2}, \bar{l}_{\text{NON-SELECTED},2}$$

⇨

$$w_k = \left(\bar{l}_{\text{NON-SELECTED},k} - \bar{l}_{\text{SELECTED},k}\right)/\bar{l}_{\text{SELECTED},k}$$

# FIG.14

```
                    ┌─────────────┐
                    │    START    │
                    └──────┬──────┘
                           ↓
            ┌──────────────────────────┐
            │     LOAD IMAGE DATA      │ ～S100
            └────────────┬─────────────┘
                         ↓
            ┌──────────────────────────┐
            │     DIVIDE IMAGE DATA    │ ～S101
            └────────────┬─────────────┘
                         ↓
            ┌──────────────────────────┐
            │    DISPLAY IMAGE DATA    │ ～S102
            └────────────┬─────────────┘
                         ↓
            ┌──────────────────────────┐
            │  RECEIVE FINAL SPECIFIED │ ～S103
            │          NUMBER          │
            └────────────┬─────────────┘
                         ↓                    S104
                   ◇─────────────◇
                  ╱  IS DISPLAYED- ╲      NO        ┌──────────────────────────┐ S105
                 ╱ CANDIDATE NUMBER ╲─────────────→ │ DETERMINE DISPLAYED-     │
                 ╲    RECEIVED?     ╱               │ CANDIDATE NUMBER         │
                  ╲───────────────╱                 └────────────┬─────────────┘
                        │ YES                                    │
                        ↓←────────────────────────────────────────┘
            ┌──────────────────────────┐
            │  RECEIVE SELECTED TARGET │ ～S106
            │           AREA           │
            └────────────┬─────────────┘
                         ↓←──────────────────────┐
            ┌──────────────────────────┐          │
            │    SEARCH SIMILAR AREAS  │ ～S107    │
            └────────────┬─────────────┘          │
                         ↓                        │
            ┌──────────────────────────┐          │
            │ SELECT SIMILAR AREAS EQUAL IN│ ～S108│
            │    NUMBER TO DISPLAYED-  │          │
            │     CANDIDATE NUMBER     │          │
            └────────────┬─────────────┘          │
                         ↓                        │
            ┌──────────────────────────┐          │
            │DISPLAY SIMILAR AREAS EQUAL IN│ ～S109│
            │    NUMBER TO DISPLAYED-  │          │
            │     CANDIDATE NUMBER     │          │
            └────────────┬─────────────┘          │
                         ↓                        │
            ┌──────────────────────────┐          │
            │  RECEIVE SELECTED TARGET │ ～S110    │
            │           AREAS          │          │
            └────────────┬─────────────┘          │
                         ↓               S111      │
                   ◇─────────────◇                 │
                  ╱  HAS NUMBER   ╲    YES          │    ┌──────────────────────────┐ S113
                 ╱ OF SELECTED TARGET╲──────────────┼──→ │  PERFORM SPECIAL EFFECT  │
                 ╲ AREAS REACHED    ╱               │    │         PROCESS          │
                  ╲ FINAL SPECIFIED╱                │    └────────────┬─────────────┘
                   ╲   NUMBER?    ╱                 │                 ↓
                    ◇──────────◇                    │          ┌─────────────┐
                        │ NO      S112              │          │     END     │
                        ↓                           │          └─────────────┘
            ┌──────────────────────────┐            │
            │    CHANGE WEIGHT VALUE   │────────────┘
            └──────────────────────────┘
```

# FIG.15

# FIG.16

# FIG.17

# FIG.18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011200745 A
- JP 2012187961 A
- JP 4148642 B
- JP 4046920 B

- JP 2000187731 A
- JP 4333902 B
- JP 9101970 A

**Non-patent literature cited in the description**

- **C. ROTHER ; V. KOLMOGORV ; A. BLAKE.** GrabCut: Interactive Foreground Extraction Using Iterated Graph Cuts, ACM, Trans. *Graphics (SIGGRAPH'04,* 2004, vol. 23 (3), 309-314

- **VINCENT ; LUC ; PIERRE SOILLE.** Watersheds in Digital Spaces: An Efficient Algorithm Based on Immersion Simulations. *IEEE Transactions on Pattern Analysis and Machine Intelligence,* June 1991, vol. 13 (6), 583-598